(19)

**Europäisches Patentamt**
**European Patent Office**
**Office européen des brevets**

(11) **EP 4 661 393 A1**

(12) **EUROPEAN PATENT APPLICATION**

(43) Date of publication:
**10.12.2025 Bulletin 2025/50**

(21) Application number: **24305885.6**

(22) Date of filing: **05.06.2024**

(51) International Patent Classification (IPC):
*H04N 19/117* (2014.01)   *H04N 19/136* (2014.01)
*H04N 19/176* (2014.01)   *H04N 19/182* (2014.01)
*H04N 19/186* (2014.01)   *H04N 19/70* (2014.01)

(52) Cooperative Patent Classification (CPC):
**H04N 19/117; H04N 19/136; H04N 19/176;**
**H04N 19/182; H04N 19/186; H04N 19/70;**
H04N 19/523; H04N 19/82

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
- **BORDES, Philippe**
  **35890 LAILLE (FR)**
- **BOSSEN, Frank**
  **TORONTO, ON M6G 3H1 (CA)**
- **BOISSON, Guillaume**
  **35137 PLEUMELEUC (FR)**
- **GALPIN, Franck**
  **35235 THORIGNE-FOUILLARD (FR)**

(74) Representative: **Vossius & Partner**
**Patentanwälte Rechtsanwälte mbB**
**Siebertstraße 3**
**81675 München (DE)**

(54) **CLASSIFICATION-BASED POST-FILTER RESCALING**

(57)    Systems, methods, and instrumentalities are disclosed herein for a device that may be configured to determine a correction of a reconstructed sample at sub-pel precision. The correction may be associated with a sub-pel correction precision. The device may determine a scaling parameter associated with the reconstructed sample. The scaling parameter may be associated with a scaling parameter precision. The device may determine a scaled correction based on the correction, the scaling parameter, and/or the scaling parameter precision. The device may apply the scaled correction to the reconstructed sample.

FIG. 10

EP 4 661 393 A1

**Description**

**BACKGROUND**

Video coding systems may be used to compress digital video signals, for example, to reduce the storage and/or transmission bandwidth associated with such signals. Video coding systems may include block-based, wavelet-based, and/or object-based systems. A block-based hybrid video coding system may be deployed.

**SUMMARY**

Systems and methods may be provided for a device such as a video encoding and/or a decoding device. The device may determine a correction of a reconstructed sample. The correction may be associated with a sub-pel correction precision. The device may determine a scaling parameter associated with the reconstructed sample. The scaling parameter may be associated with a scaling parameter precision. The device may determine a scaled correction based on the correction, the scaling parameter, and/or the scaling parameter precision. The device may apply the scaled correction to the reconstructed sample.

In examples, the device may determine an offset based on the sub-pel correction precision and/or the scaling parameter precision. The scaled correction may be determined further based on the offset. The offset may be determined based on a sign of the correction. The device may determine the scaling parameter based on a classification. The classification may be associated with at least a reconstructed luma sample. The device may determine the scaled correction based on the sub-pel correction precision, wherein the scaled correction is associated with a full-pel correction precision. The reconstructed sample may include at least one of a reconstructed luma sample and/or a reconstructed chroma sample.

A method may include determining a correction of a reconstructed sample. The correction may be associated with a sub-pel correction precision. The method may include determining a scaling parameter associated with the reconstructed sample. The scaling parameter may be associated with a scaling parameter precision. The method may include determining a scaled correction based on the correction, the scaling parameter, and/or the scaling parameter precision. The method may include applying the scaled correction to the reconstructed sample.

In examples, the method may include determining an offset based on the sub-pel correction precision and/or the scaling parameter precision. The scaled correction may be determined further based on the offset. The offset may be determined based on a sign of the correction. The method may include determining the scaling parameter based on a classification. The classification may be associated with at least a reconstructed luma sample. The method may include determining the scaled correction based on the sub-pel correction precision, wherein the scaled correction is associated with a full-pel correction precision.

A computer program product may be included which is stored on a non-transitory computer readable medium and comprises program code instructions for implementing the steps according to a method as described herein when executed by a processor. Video data may include information representative of the current video block encoded in accordance with the methods and/or steps as described herein.

Systems, methods, and instrumentalities described herein may involve a decoder. In some examples, the systems, methods, and instrumentalities described herein may involve an encoder. In some examples, the systems, methods, and instrumentalities described herein may involve a signal (e.g., from an encoder and/or received by a decoder). A computer-readable medium may include instructions for causing one or more processors to perform methods described herein. A computer program product may include instructions which, when the program is executed by one or more processors, may cause the one or more processors to carry out the methods described herein. A system of one or more computers may be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

**BRIEF DESCRIPTION OF THE DRAWINGS**

FIG. 1A is a system diagram illustrating an example communications system in which one or more disclosed examples may be implemented.

FIG. 1B is a system diagram illustrating an example wireless transmit/receive unit (WTRU) that may be used within the communications system illustrated in FIG. 1A.

FIG. 1C is a system diagram illustrating an example radio access network (RAN) and an example core network (CN) that may be used within the communications system illustrated in FIG. 1A.

FIG. 1D is a system diagram illustrating a further example RAN and a further example CN that may be used within the communications system illustrated in FIG. 1A.

FIG. 2 illustrates an example video encoder.

FIG. 3 illustrates an example video decoder.

FIG. 4 is a block diagram illustrating an example of a system in which various aspects and examples are implemented.

FIG. 5 is a flowchart illustrating an example process for classified-based post-filtering.

FIG. 6 is a flowchart illustrating an example process for post-filtering with re-scaled correction.

FIG. 7 illustrates an example of a sample adaptive offset band-offset (SAO BO) mode, where the pixel range from 0-255 (in 8-bits) may be uniformly split into 32 bands.

FIG. 8 is a flowchart illustrating an example process for classification-based scaling correction.

FIG. 9 is a flowchart illustrating an example process for post-filtering with classification-based scaling correction.

FIG. 10 is a flowchart illustrating an example process for classification-based scaling correction.

## DETAILED DESCRIPTION

A more detailed understanding may be had from the following description, given by way of example in conjunction with the accompanying drawings.

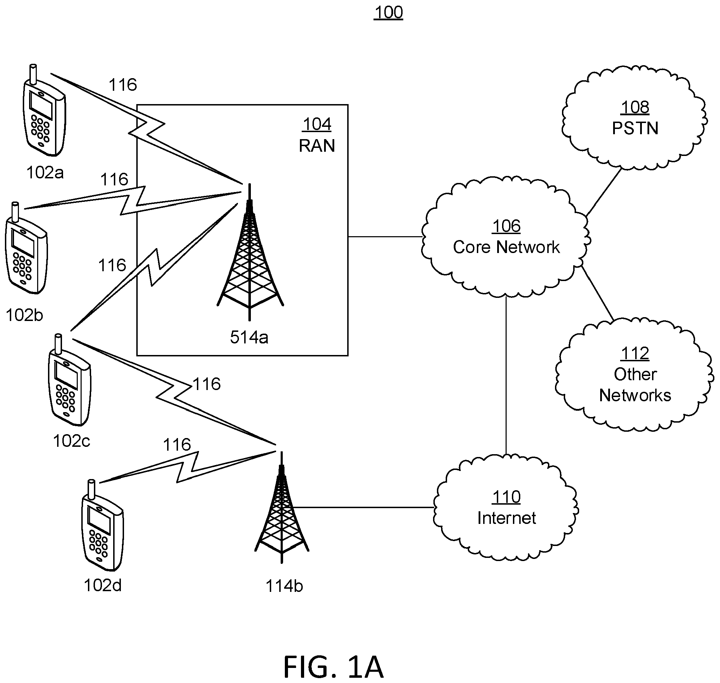

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., a eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

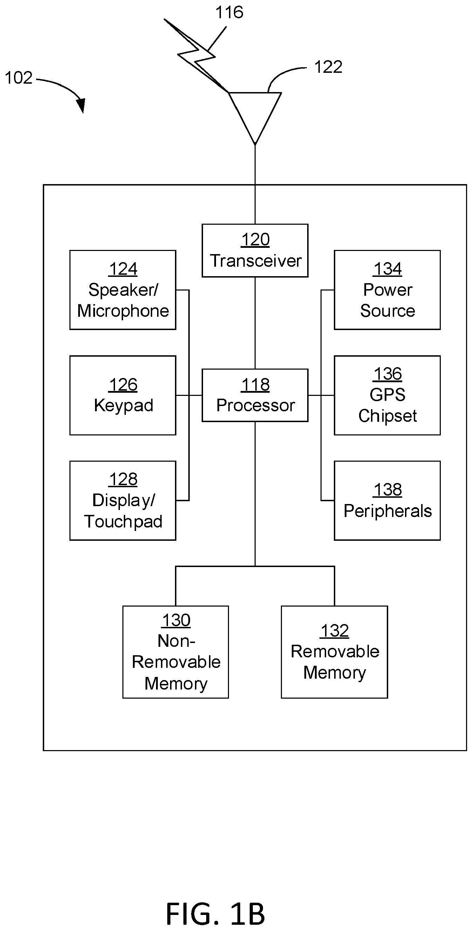

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the VIΓΓRU 102 may include any number of transmit/receive elements 122. More specifically, the VIΓΓRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The VIΓΓRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

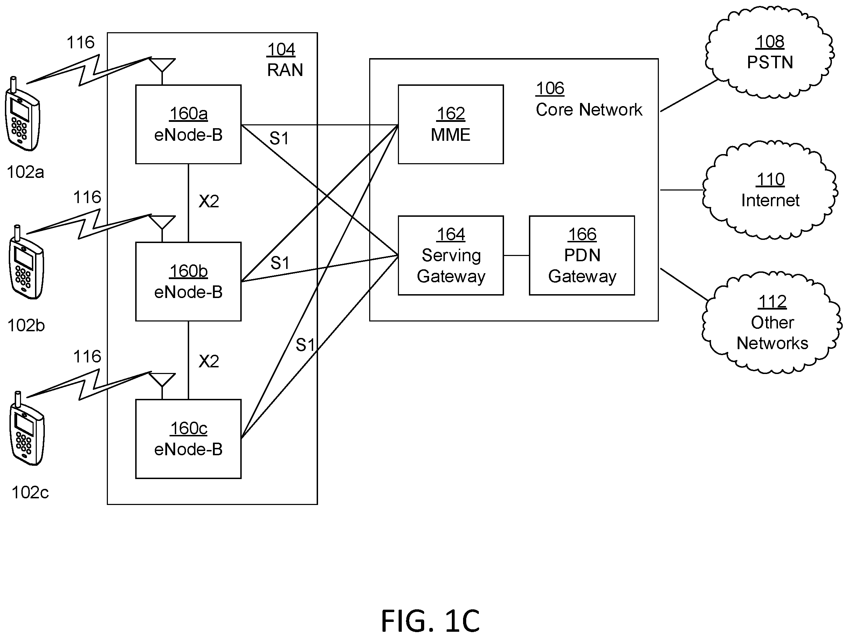

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

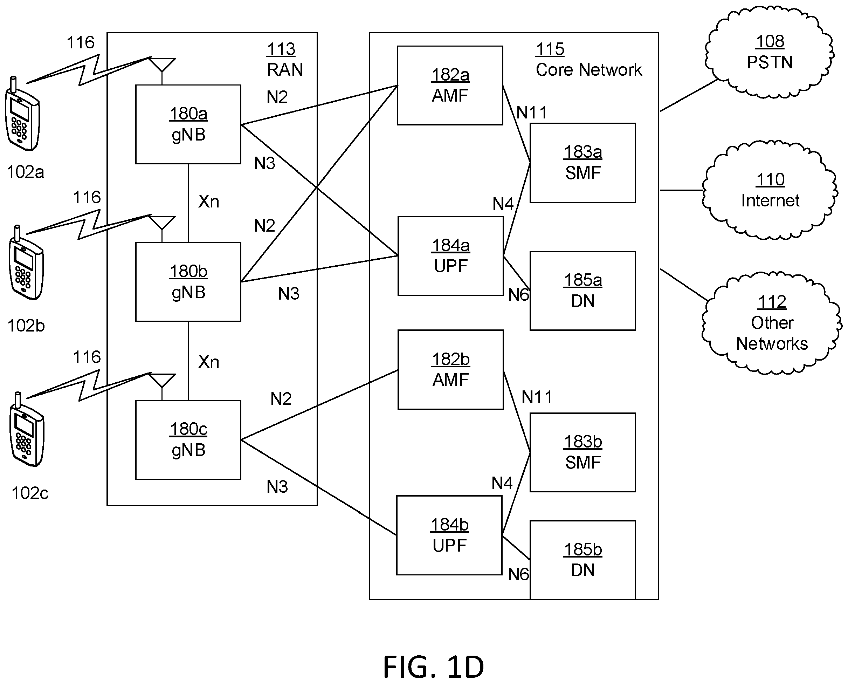

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a, 184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b and an N6 interface between the UPF 184a, 184b and the ON 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, ON 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

This application describes a variety of aspects, including tools, features, examples, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects may be combined and interchanged to provide further aspects. Moreover, the aspects may be combined and interchanged with aspects described in earlier filings as well.

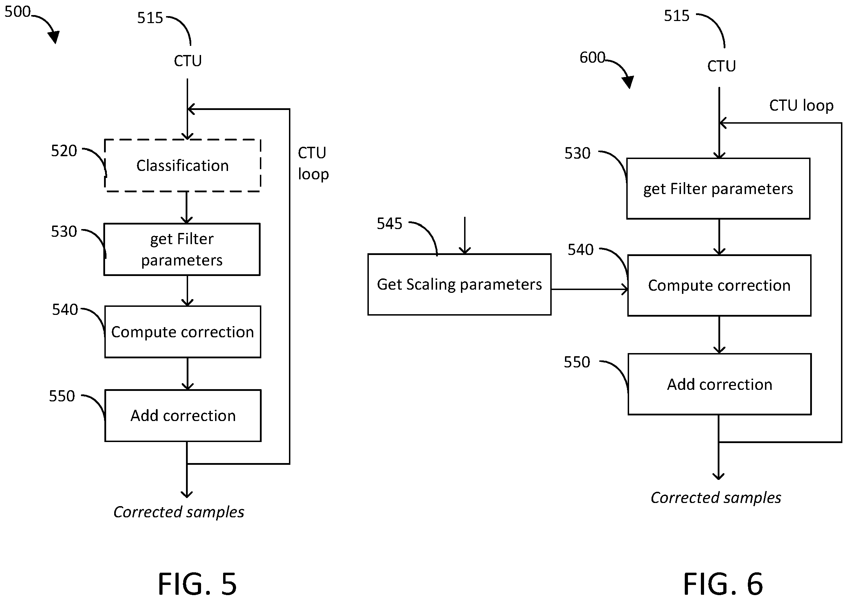

The aspects described and contemplated in this application may be implemented in many different forms. FIGS. 5-10 described herein may provide some examples, but other examples are contemplated. The discussion of FIGS. 5-10 does not limit the breadth of the implementations. At least one of the aspects generally relates to video encoding and decoding, and at least one other aspect generally relates to transmitting a bitstream generated or encoded. These and other aspects may be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various examples to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

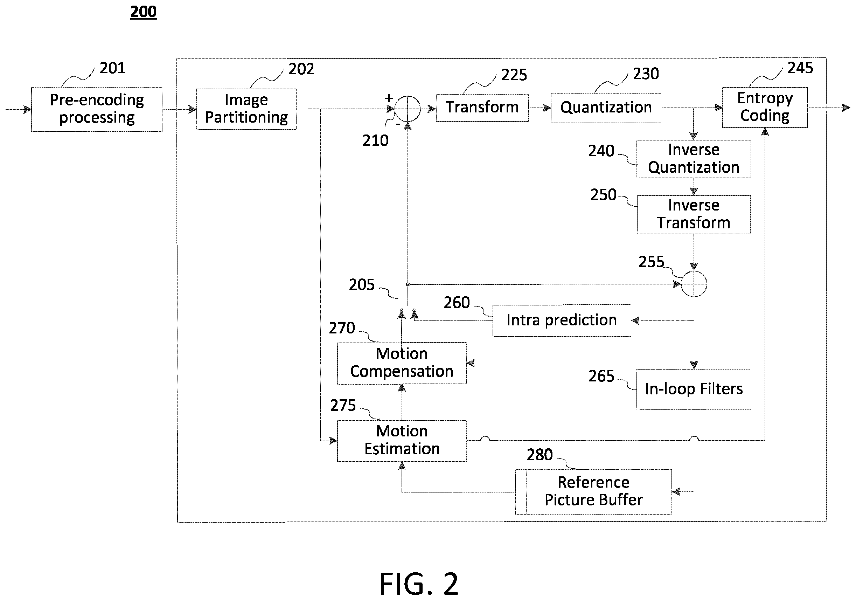

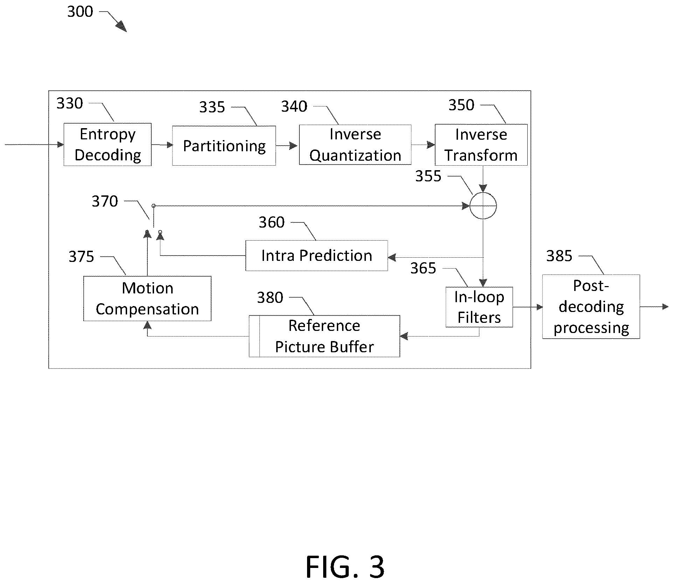

Various methods and other aspects described in this application may be used to modify modules, for example, decoding modules, of a video encoder 200 and decoder 300 as shown in FIG. 2 and FIG. 3. Moreover, the subject matter disclosed herein may be applied, for example, to any type, format or version of video coding, whether described in a standard or a recommendation, whether pre-existing or future-developed, and extensions of any such standards and recommendations. Unless indicated otherwise, or technically precluded, the aspects described in this application may be used individually or in combination.

Various numeric values are used in examples described the present application, such as a number of classes, a correction value, a post-filtering value, an offset, a scaling value, a classifier, a class index value, scaling parameter value, a number of bits of precision, a number of groups, and/or the like. These and other specific values are for purposes of describing examples and the aspects described are not limited to these specific values.

FIG. 2 is a diagram showing an example video encoder. Variations of example encoder 200 are contemplated, but the encoder 200 is described below for purposes of clarity without describing all expected variations.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata may be associated with the pre-processing, and attached to the bitstream.

In the encoder 200, a picture is encoded by the encoder elements as described below. The picture to be encoded is partitioned (202) and processed in units of, for example, coding units (CUs). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset) filtering to reduce encoding artifacts. The filtered image is stored at a reference picture buffer (280).

FIG. 3 is a diagram showing an example of a video decoder. In example decoder 300, a bitstream is decoded by the decoder elements as described below. Video decoder 300 generally performs a decoding pass reciprocal to the encoding pass as described in FIG. 2. The encoder 200 also generally performs video decoding as part of encoding video data.

In particular, the input of the decoder includes a video bitstream, which may be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block may be obtained (370) from intra prediction (360) or motion-compensated prediction (i.e., inter prediction) (375). In-loop filters (365) are applied to the reconstructed image. The filtered image is stored at a reference picture buffer (380).

The decoded picture can further go through post-decoding processing (385), for example, an inverse color transform (e.g. conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream. In an example, the decoded images (e.g., after application of the in-loop filters (365) and/or after post-decoding processing (385), if post-decoding processing is used) may be sent to a display device for rendering to a user.

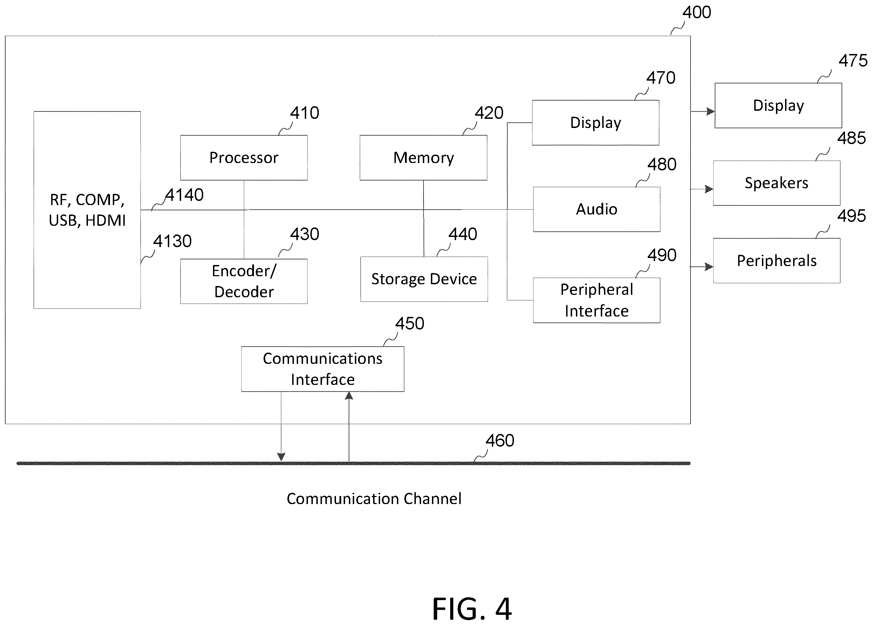

FIG. 4 is a diagram showing an example of a system in which various aspects and examples described herein may be implemented. System 400 may be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, may be embodied in a single integrated circuit (IC), multiple ICs, and/or discrete components. For example, in at least one example, the processing and encoder/decoder elements of system 400 are distributed across multiple ICs and/or discrete components. In various examples, the system 400 is communicatively coupled to one or more other systems, or other electronic devices, via, for example, a communications bus or through dedicated input and/or output ports. In various examples, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that may be included in a device to perform the encoding and/or decoding functions. As is known, a device can include one or both of the encoding and decoding modules. Additionally, encoder/decoder module 430 may be implemented as a separate element of system 400 or may be incorporated within processor 410 as a combination of hardware and software as known to those skilled in the art.

Program code to be loaded onto processor 410 or encoder/decoder 430 to perform the various aspects described in this document may be stored in storage device 440 and subsequently loaded onto memory 420 for execution by processor 410. In accordance with various examples, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some examples, memory inside of the processor 410 and/or the encoder/decoder module 430 is used to store instructions and to provide working memory for processing that is needed during encoding or decoding. In other examples, however, a memory external to the processing device (for example, the processing device may be either the processor 410 or the encoder/decoder module 430) is used for one or more of these functions. The external memory may be the memory 420 and/or the storage device 440, for example, a dynamic volatile memory and/or a non-volatile flash memory. In several examples, an external non-volatile flash memory is used to store the operating system of, for example, a television. In at least one example, a fast external dynamic volatile memory such as a RAM is used as working memory for video encoding and decoding operations.

The input to the elements of system 400 may be provided through various input devices as indicated in block 445. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 4, include composite video.

In various examples, the input devices of block 445 have associated respective input processing elements as known in the art. For example, the RF portion may be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which may be referred to as a channel in certain examples, (iv) demodulating the downconverted and band-limited signal, (v) performing error correction, and/or (vi) demultiplexing to select the desired stream of data packets. The RF portion of various examples includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box example, the RF portion and its associated input processing element receives an RF signal transmitted over a wired (for example, cable) medium, and performs frequency selection by filtering, downconverting, and filtering again to a desired frequency band. Various examples rearrange the order of the above-described (and other) elements, remove some of these elements, and/or add other elements performing similar or different functions. Adding elements can include inserting elements in between existing elements, such as, for example, inserting amplifiers and an analog-to-digital converter. In various examples, the RF portion includes an antenna.

The USB and/or HDMI terminals can include respective interface processors for connecting system 400 to other electronic devices across USB and/or HDMI connections. It is to be understood that various aspects of input processing, for example, Reed-Solomon error correction, may be implemented, for example, within a separate input processing IC or within processor 410 as necessary. Similarly, aspects of USB or HDMI interface processing may be implemented within separate interface ICs or within processor 410 as necessary. The demodulated, error corrected, and demultiplexed stream is provided to various processing elements, including, for example, processor 410, and encoder/decoder 430 operating in combination with the memory and storage elements to process the datastream as necessary for presentation on an output device.

Various elements of system 400 may be provided within an integrated housing, Within the integrated housing, the various elements may be interconnected and transmit data therebetween using suitable connection arrangement 425, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 may be implemented, for example, within a wired and/or a wireless medium.

Data is streamed, or otherwise provided, to the system 400, in various examples, using a wireless network such as a Wi-Fi network, for example IEEE 802.11 (IEEE refers to the Institute of Electrical and Electronics Engineers). The Wi-Fi signal of these examples is received over the communications channel 460 and the communications interface 450 which are adapted for Wi-Fi communications. The communications channel 460 of these examples is typically connected to an access point or router that provides access to external networks including the Internet for allowing streaming applications and other over-the-top communications. Other examples provide streamed data to the system 400 using a set-top box that delivers the data over the HDMI connection of the input block 445. Still other examples provide streamed data to the system 400 using the RF connection of the input block 445. As indicated above, various examples provide data in a non-streaming manner. Additionally, various examples use wireless networks other than Wi-Fi, for example a cellular network or a Bluetooth® network.

The system 400 can provide an output signal to various output devices, including a display 475, speakers 485, and other peripheral devices 495. The display 475 of various examples includes one or more of, for example, a touchscreen display, an organic light-emitting diode (OLED) display, a curved display, and/or a foldable display. The display 475 may be for a television, a tablet, a laptop, a cell phone (mobile phone), or other device. The display 475 can also be integrated with other components (for example, as in a smart phone), or separate (for example, an external monitor for a laptop). The other peripheral devices 495 include, in various examples, one or more of a stand-alone digital video disc (or digital versatile disc) (DVD, for both terms), a disk player, a stereo system, and/or a lighting system. Various examples use one or more peripheral devices 495 that provide a function based on the output of the system 400. For example, a disk player performs the function of playing the output of the system 400.

In various examples, control signals are communicated between the system 400 and the display 475, speakers 485, or other peripheral devices 495 using signaling such as AV.Link, Consumer Electronics Control (CEC), or other communications protocols that enable device-to-device control with or without user intervention. The output devices may be communicatively coupled to system 400 via dedicated connections through respective interfaces 470, 480, and 490. Alternatively, the output devices may be connected to system 400 using the communications channel 460 via the communications interface 450. The display 475 and speakers 485 may be integrated in a single unit with the other components of system 400 in an electronic device such as, for example, a television. In various examples, the display interface 470 includes a display driver, such as, for example, a timing controller (T Con) chip.

The display 475 and speakers 485 can alternatively be separate from one or more of the other components, for example, if the RF portion of input 445 is part of a separate set-top box. In various examples in which the display 475 and speakers 485 are external components, the output signal may be provided via dedicated output connections, including, for example, HDMI ports, USB ports, or COMP outputs.

The examples may be carried out by computer software implemented by the processor 410 or by hardware, or by a combination of hardware and software. As a non-limiting example, the examples may be implemented by one or more integrated circuits. The memory 420 may be of any type appropriate to the technical environment and may be implemented using any appropriate data storage technology, such as optical memory devices, magnetic memory devices, semiconductor-based memory devices, fixed memory, and removable memory, as non-limiting examples. The processor 410 may be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various examples, such processes include one or more of the processes typically performed by a decoder, for example, entropy decoding, inverse quantization, inverse transformation, and differential decoding. In various examples, such processes also, or alternatively, include processes performed by a decoder of various implementations described in this application, for example, a video decoding device may determine a correction of a reconstructed sample. The correction may be associated with a sub-pel correction precision. The video decoding device may determine a scaling parameter associated with the reconstructed sample. The scaling parameter may be associated with a scaling parameter precision. The video decoding device may determine a scaled correction based on the correction, the scaling parameter, the sub-pel correction precision, and/or the scaling parameter precision. The video decoding device may apply the scaled correction to the reconstructed sample.

As further examples, in one example "decoding" refers only to entropy decoding, in another example "decoding" refers only to differential decoding, and in another example "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various examples, such processes include one or more of the processes typically performed by an encoder, for example, partitioning, differential encoding, transformation, quantization, and entropy encoding. In various examples, such processes also, or alternatively, include processes performed by an encoder of various implementations described in this application, for example, a video encoding device may determine a correction of a reconstructed sample. The correction may be associated with a sub-pel correction precision. The video encoding device may determine a scaling parameter associated with the reconstructed sample. The scaling parameter may be associated with a scaling parameter precision. The video encoding device may determine a scaled correction based on the correction, the scaling parameter, the sub-pel correction precision, and/or the scaling parameter precision. The video encoding device may apply the scaled correction to the reconstructed sample.

As further examples, in one example "encoding" refers only to entropy encoding, in another example "encoding" refers only to differential encoding, and in another example "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

An adaptive loop filter (ALF) may be a linear filter and/or a neural network based (NN) filter. An ALF may correct a reconstructed sample (e.g., ALF correction). An ALF correction may be modified (e.g., scaled) using one or more ALF scale parameters. Note that syntax elements as used herein, for example, coding syntax on ALF scale indication, ALF scale parameter index indication, ALF scale parameter index value, a number of possible scaling values, and/or a chroma scaling parameter index, etc., are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein may be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus may be implemented in, for example, appropriate hardware, software, and firmware. The methods may be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one example" or "an example" or "one implementation" or "an implementation", as well as other variations thereof, means that a particular feature, structure, characteristic, and so forth described in connection with the example is included in at least one example. Thus, the appearances of the phrase "in one example" or "in an example" or "in one implementation" or "in an implementation", as well any other variations, appearing in various places throughout this application are not necessarily all referring to the same example.

Additionally, this application may refer to "determining" various pieces of information. Determining the information can include one or more of, for example, estimating the information, calculating the information, predicting the information, or retrieving the information from memory. Obtaining may include receiving, retrieving, constructing, generating, and/or determining.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. Encoder signals may include, for example, an ALF scale indication, an ALF scale parameter index indication, an ALF scale parameter index value, the number of scaling values, a chroma scaling parameter index, and/or the like. In this way, in an example the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various examples. It is to be appreciated that signaling may be accomplished in a variety of ways. For example, one or more syntax elements, flags, and so forth are used to signal information to a corresponding decoder in various examples. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information can include, for example, instructions for performing a method, or data produced by one of the described implementations. For example, a signal may be formatted to carry the bitstream of a described example. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on, or accessed or received from, a processor-readable medium.

Many examples are described herein. Features of examples may be provided alone or in any combination, across various claim categories and types. Further, examples may include one or more of the features, devices, or aspects described herein, alone or in any combination, across various claim categories and types. For example, features described herein may be implemented in a bitstream or signal that includes information generated as described herein. The information may allow a decoder to decode a bitstream, the encoder, bitstream, and/or decoder according to any of the embodiments described. For example, features described herein may be implemented by creating and/or transmitting and/or receiving and/or decoding a bitstream or signal. For example, features described herein may be implemented a method, process, apparatus, medium storing instructions, medium storing data, or signal. For example, features described herein may be implemented by a TV, set-top box, cell phone, tablet, or other electronic device that performs decoding. The TV, set-top box, cell phone, tablet, or other electronic device may display (e.g. using a monitor, screen, or other type of display) a resulting image (e.g., an image from residual reconstruction of the video bitstream). The TV, set-top box, cell phone, tablet, or other electronic device may receive a signal including an encoded image and perform decoding.

In-loop post-filtering may be implemented by video codecs. A reconstructed picture may be enhanced with post-filtering. The post-filtering stage may be referred to as in-loop, for example, if/when the filtered pictures may be stored in the decoded picture buffer (DPB) to be furtherly used as inter-prediction.

In some examples, post-filtering may use additional data, e.g., also known as filter parameters, such as linear filter coefficients, sample offsets, etc., that may be implicit (e.g., pre-defined values that may be known at the decoder side), e.g., also known as fixed filters, or explicit (e.g., values coded in the bitstream), e.g., also known as non-fixed or adaptive filters or sample adaptive offsets.

FIG. 5 is a flowchart illustrating an example process 500 for classified-based post-filtering. In some examples (e.g., as shown in FIG. 5), picture samples (e.g., 515) may be classified (520) into N classes $Cl_{i=0,...N-1}$ A set of N filter parameters $P_{i=0,...N-1}$ may be selected (e.g., implicit case) or coded in the bitstream (e.g., explicit case). A (e.g., each) sample classified as $Cl_k$ may be filtered with filter parameter $P_k$

A post-filtering process may compute (e.g., for each reconstructed sample) a correction (540) to be added (550) to the reconstructed samples. In case of classification-based filtering, a correction may be based on the parameters (530) associated with a class (520) of the sample.

Neural network (NN)-based post-filtering may compute a correction to be added to the reconstructed samples by inferring (applying) the NN. There may not be a classification, since the classification may be implicitly performed by NN layers and stored in a latent space. Filter parameters may be the coefficients of an NN, which may be (e.g., implicitly) known at the decoder side. Filter parameters (e.g., NN coefficients) may be selected, for example, depending on coding parameters (e.g., quantization parameter (QP)). An NN may use reconstructed samples and coding information (e.g., residuals, deblocking filter parameters, etc.) at the input. An NN may have been trained (e.g., or partially trained) during a preliminary (e.g., off-line) training stage using a set of data.

FIG. 6 is a flowchart illustrating an example process 600 for post-filtering with re-scaled correction. In some examples (e.g., as shown in FIG. 6), a parameter allowing derivation of a scaling (scale) or offset (off) parameter may be transmitted in the bitstream (545) to adapt the correction (540). Examples of adaptation of the correction may be determined, for example, in accordance with Eqs. (1) and (2):

$$corr' = scale \times corr \qquad (1)$$

$$corr' = corr + off \qquad (2)$$

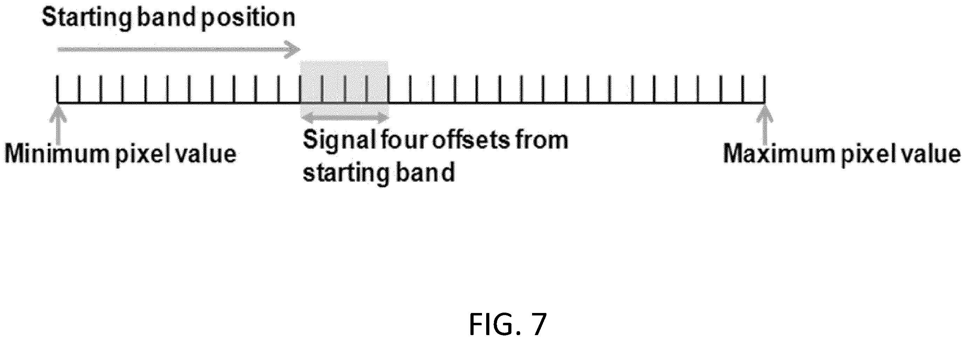

FIG. 7 illustrates an example of SAO BO mode, where the pixel range from 0-255 (in 8-bits) may be uniformly split into 32 bands. A sample-adaptive offset (SAO) and/or cross-component SAO (CC-SAO) filter may be implemented. SAO band-offset (BO) and edge-offset (EO) modes may use classification (NC). Sample values belonging to one or more classes may be modified, for example, by adding an offset, off(n), which may be (e.g., explicitly) coded in the bitstream ($P_{i=0...3}$=off(i)).

For example, a BO band may use a classifier where the sample range of values for component 'c' (e.g., 0..255, in 8-bits) may be split (e.g., uniformly split) into N(c)=32 bands. The sample values belonging to (NC-1)=4 consecutive bands may be modified, for example, by adding an offset, off(n), which may be (e.g., explicitly) coded in the bitstream ($P_{i=0...3}$=off(i)). FIG. 7 shows an example of four (4) consecutive bands. The (NC-1)=4 signed offset values and/or the starting band may be coded, for example, one for each of the (NC-1)=4 bands (e.g., the remaining bands have offset equal to zero).

Similar to SAO, CCSAO may classify reconstructed samples into different BO or EO categories that may be derived from current (e.g., Cb) and other components (e.g., Y, Cr). An (e.g., one) offset may be (e.g., properly) derived for a (e.g., each) category. Offset values may be added to reconstructed samples in a (e.g., each) category.

For example, in CC-SAO BO mode, for a given luma/chroma sample, three candidate samples may be selected to classify a given sample into different categories: one collocated Y sample, one collocated U sample, and one collocated V sample. Sample values of the three selected samples may (e.g., then) be classified into three different bands { $band_Y$, $band_U$, $band_V$ }. A joint index "i" may be used to indicate a category of a given sample. An (e.g., one) offset may be signaled and added to reconstructed samples that fall into a category, which may be formulated, for example, in accordance with the set of Eqs. (3):

$$band_Y = (Y_{col} \cdot N_Y) \gg BD$$
$$band_U = (U_{col} \cdot N_U) \gg BD$$
$$band_V = (V_{col} \cdot N_V) \gg BD \qquad (3)$$
$$i = band_Y \cdot (N_U \cdot N_V) + band_U \cdot N_V + band_V$$
$$C'_{rec} = Clip1(C_{rec} + \sigma_{CCSAO}[i])$$

where { $Y_{col}$, $U_{col}$, $V_{col}$ } may be three selected collocated samples that are used to classify a current sample; {$N_Y$, $N_U$, $N_V$} may be the numbers of equally divided bands applied to { $Y_{col}$, $U_{col}$, $V_{col}$ } the full range, respectively; BD may be an internal coding bit-depth; $C_{rec}$ and $C'_{rec}$ may be reconstructed samples before and after CCSAO is applied; and $\sigma_{CCSAO}$[i] may be a value of the CCSAO offset that may be applied to the i-th BO category.

Similar to SAO, different classifiers may be applied to different local regions to further enhance whole picture quality. Parameters for each classifier (e.g., parameters $N_Y$, Nu, Nv, and offsets) may be signaled, for example, at a frame level. A classifier to be used may be (e.g., explicitly) signaled and switched, for example, at a coding tree block (CTB) level. One or more constraints may apply, for example, for a (e.g., each) classifier. The maximum of {$N_Y$,$N_U$,$N_V$} may be set, for example, to {16, 4, 4}. Offsets may be (e.g., constrained) for example, within a range [-15, 15]. The maximum classifiers per frame may be constrained, for example, to be four (4).

An ALF and/or cross-component ALF ( CC-ALF) filter may be applied. An ALF may classify reconstructed samples (e.g., luma and/or chroma) into different classes. A (e.g., one) class index ($CI_k$) may be associated with one or more (e.g., each) reconstructed sample. A set of filter parameters $P_k$ may be associated with a (e.g., each) class index. For example, $P_k$ may be a set of linear filter coefficients. An example of an ALF filter may be represented, for example, in accordance with Eq. (4):

$$F_k(x_0) = \sum_{i=-n}^{n} c_i \cdot x_i \qquad (4)$$

Where $P_k=\{c_i\}_{i=-n...+n}$ may be filter coefficients, xi may be sample neighbors to x, $x=x_0$ and $F_k(x)$ may be a filtered value of x.

One or more classifiers may be used. The type of classifier may be signaled in the bitstream. For example (e.g., in ALF), non-fixed filters may use Laplacian or a band classifier. In some examples, other reconstructed sample based data may be used for classification, such as residual samples.

A band classifier may classify luma reconstructed samples into (e.g., equally) spaced bands between 0 and (1<<bitdepth), where bitdepth may be an integer bit depth representation of a (e.g., one) reconstructed sample data. Similarly, a residual classifier may derive classes with absolute of residual values. A Laplacian classifier may use local gradients to derive dominant direction and/or activity to derive classes.

Non-fixed ALF coefficients may be coded. Non-fixed coefficients of ALF may be derived for a (e.g., one) frame and/or transmitted in the bitstream into an (e.g., one) Adaptation Parameter Set (APS) nal unit. One APS nal unit may include "numAlt" (e.g., alternative) filter sets (e.g., numAlt=4). Multiple classes of a filter set may be grouped, for example, so that coefficients may be the same and/or similar for different classes, which may increase coding efficiency. The APS may be indexed with an "apsId." CTUs of subsequent frames may re-use coefficients of an ALF that were previously decoded from an APS. The (e.g., which) "apsId" to use may be signaled (e.g., per slice or per CTU) in video data (e.g., a bitstream).

Adaptive clipping may be performed. The minimum and/or maximum (min/max) sample value may be coded in the bitstream (e.g., slice header), for example, to define constrained dynamic range values. A clipping operation may be applied, for example, in filtering, sampling, interpolation, weighted prediction, weighted combination, reconstruction, and/or in other stages, for example, to ensure that a generated prediction and/or reconstruction samples remain in a defined dynamic range. At an encoder, the min/max values may be obtained, for example, by scanning sample values in an original picture. An (e.g., original) image/slice may be pre-filtered before encoding, e.g., using a motion compensated temporal filter (MCTF). Min/max values may be obtained, for example, by scanning sample values in a pre-filtered picture/slice.

Scaling of post-filtering correction may consider deriving a set of scaling parameters tailored to a classification.

Deriving and applying different scaling parameters with an appropriate classification may improve the benefit of scaling the post-filtering correction in video coding.

Considering ALF, non-fixed coefficients may have been derived (e.g., optimized) for a (e.g., one) frame and transmitted in the bitstream into an APS nal unit. Non-fixed coefficients may be sub-optimal for subsequent frames.

Systems, methods, and instrumentalities are disclosed for classification-based post-filter re-scaling. Scaling parameters may be adapted to an associated classification. Scaling parameters may allow for modifying a post-filter correction. A classifier may re-use existing classifiers that may be used by a post-filter or another classifier. An adaptive classifier may allow, for example, one or more of the following: classification-based scaling correction; NN-based post-filtering with classification-based scaling correction; and/or signaling of the scaling parameters.

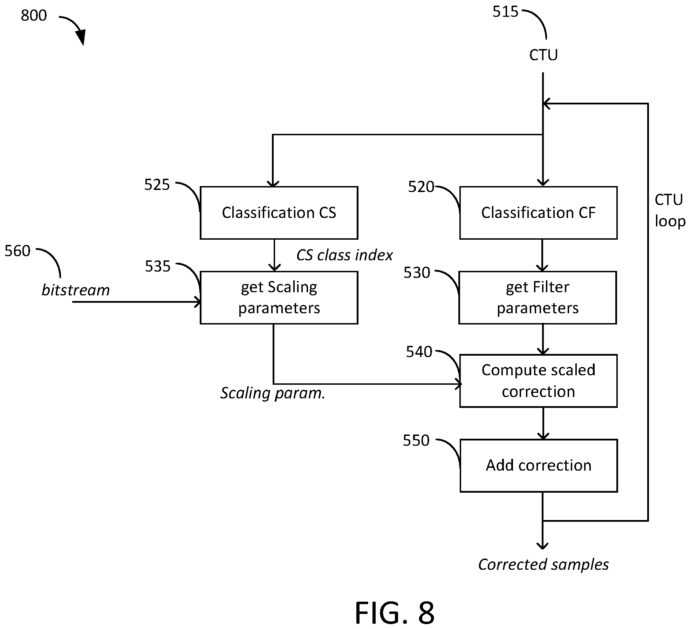

FIG. 8 is a flowchart illustrating an example process 800 for classification-based scaling correction.

Classification-based scaling correction may be implemented. A scaling correction may be tailored to a (e.g., one) classification (CS). As shown by example in FIG. 8, a classifier (525) may allow derivation of a (e.g., one) class index for each reconstructed sample. A set of scaling parameters may be defined. The correction may be scaled with the scaling parameters associated with the class index (535). Examples of scaling parameters may include "scale" or "off," for example, as depicted in Eqs. (1) and (2), respectively. Other examples of correction models may be represented, for example, in accordance with Eqs. (5), (6), and (7) where "corr" is the post-filter correction, $\{s_i, o_j\}$ are the scaling parameters, and "corr' " is the scaled correction:

$$\text{corr}' = s_0 \times \text{corr} + s_1 \times \text{corr}^2 \qquad\qquad (5)$$

$$\text{corr}' = s_0 \times \text{corr} + o_0 \qquad\qquad (6)$$

$$\text{corr}' = s_0 \times \text{corr} + s_1 \times \text{corr}^2 + o_0 \qquad\qquad (7)$$

In some examples, the classifier CS may be same as the classifier CF that may be used to derive the filter parameters (e.g., filter coefficients).

The value of (min;max) may be derived from the adaptive clipping information coded in the bitstream (560). For example, if CS is a band classifier, the minimum and maximum bands may be defined relative to the clipping range.

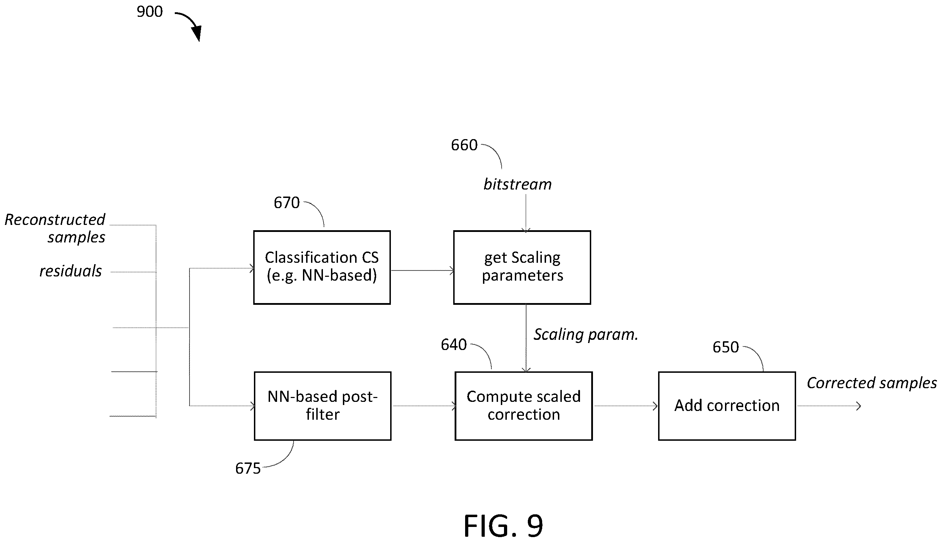

FIG. 9 is a flowchart illustrating an example process 900 for NN-based post-filtering with classification-based scaling correction.

Neural network (NN)-based post-filtering (675) may be implemented with classification-based scaling correction. NN-based post filtering (675) may compute (e.g., for each reconstructed sample) a correction (640) to be added (650) to samples.

In some examples (e.g., as described herein), a NN-based post-filter may use a (e.g., an additional) classifier process. For example (e.g., as shown by example in FIG. 9), a NN-based (or non NN-based) module (670) may operate as a classifier to derive a class index for each sample to be corrected. Scaling parameters (e.g., optimal scaling parameters) may be derived for each frame, for example, to minimize distortion with the original frame.

Scaling parameters may be signaled. One or more (e.g., a set or subset) of the scaling parameters may be transmitted in the bitstream (660) and/or may be known (e.g., implicitly) at the decoder. The scaling parameters may not be transmitted explicitly. An index (e.g., idxCorr) referring to a pre-determined table (LUT) of scaling parameter values may be used. An index value (e.g., idxCorr=0) may correspond to not modifying the correction. One or multiple pre-determined tables may be used. A selected table may depend on, for example, one or more coding parameters, such as the temporal identifier index (Tld) of the current picture/slice, the QP base of the slice, the picture order count (POC), the slice type, and/or the like. In examples, a table may be selected implicitly and/or signaled in video data (e.g. a bitstream). A scaling parameter (e.g., indexes) may be coded in a slice header, a picture header, and/or the like, or in the video coding layer (VCL) (e.g., using a context-adaptive binary arithmetic coding (CABAC) entropy coder). In examples, table indexes may be coded with a first CTU data. Values of the tables may be updated from the scaling parameter (e.g., indexes) that may have been previously coded in the bitstream (660). In examples, the table may be updated with a scaling parameter (e.g., indexes) that may have been previously coded in the bitstream for previous frames, e.g., with same Tld.

The number of transmitted scaling parameter indexes may be inferior to the number of CS classes. In some examples, non-transmitted index values may be inferred, for example to correspond to "correction not modified." Some classes may be grouped together. A (e.g., one single) transmitted index may be associated with several classes. For example, a syntax element GS may be signaled (e.g., first), allowing the derivation of the number of group (nbGroup). The nbGroup scaling parameter indexes may be coded

(e.g., next). For example, nbGroup = 1 << GS or nbGroup = GS. Or some pre-determined values of "nbGroup" may be associated with different values of GS.

In some examples (e.g., ALF post-filter), the grouping of classes may be the same as the group used for the transmitted filter coefficients of APS-ALF parameters, e.g., if CS is same as CF.

The value of (min;max) (e.g., may be the minimal and/or maximal sample values for a (e.g., one) component) may be derived, for example, from the adaptive clipping information coded in the bitstream and/or derived from pervious reconstructed frames. Scaling parameter(s) (e.g., indexes) for the classes corresponding to samples out of the clipping range may not be transmitted, for example, if a classifier is a band classifier. For the subsequent frames, the scaling parameters for the classes out of the clipping range may be inferred to a pre-determined value (e.g., "correction not modified" or same as closest transmitted index value).

An example of syntax for coding the scaling parameter indexes in the slice header is depicted in Table 1.

Table 1 - Example of syntax for coding the scaling parameter indexes

| slice_header( ) { | Descriptor |
|---|---|
| use_alf_scale_flag | u(1) |
| if(use_alf_scale_flag) | |
| for (int i = 0; i < pcSlice->getTileGroupNumAps(); i++) { | |
| for (int j = 0; j < numAlts[i] ; j++) { | |
| alf_scale_group_shift[i][j] | ue(v) |
| For (int g = 0; g < (1<< alf scale_group shift[i][j]); g++) { | |
| alf_scale_group_idx_corr[i][j][g] | u(1) |
| if ( alf scale_group idx corr[i][j][g] && nbCorr > 2 ) { | |
| uiCode | u(nbCorr) |
| alf scale_group idx corr[i][j][g] += uiCode | |
| } | |
| } | |
| } | |
| } | |
| } | |

With reference to the syntax example in Table 1, a parameter use_alf_scale_flag equal to zero ( 0) may indicate, for example, that no scaling parameters are coded and/or that the scaling parameter indexes may be inferred to be zero (0). A parameter use_alf_scale_flag equal to one (1) may indicate, for example, that one or more (e.g., some) scaling parameters are coded. A parameter alf scale_group shift[i][j] may allow derivation of the number of coded scaling parameter indexes for the $j^{th}$ alternative filter of the $i^{th}$ APS referenced in the current slice equal to (1 « alf_scale_group_shift[i][j]). A parameter alf_scale_group_idx_corr[i][j][g] may be a scaling parameter index associated with the $g^{th}$ group of classes.

Classification-based post-filter re-scaling may be performed. For example, a scaling parameter may be selected. The scaling parameter may be selected from several scaling parameters. A (e.g., each) scaling value may be associated with a classification index. A classification index may be identified by a classifier. A classifier may be used to classify a (e.g., each) reconstructed sample of a reconstructed picture. In examples, a classifier (CS) may be the same and/or similar to an (e.g., one existing) ALF classifier (CF), and/or same and/or similar as an ALF classifier used for a current reconstructed sample. In examples, a classifier may be a neural network.

A correction may be determined. For example, the correction may be or may be determined based on the difference between a reconstructed sample value and a post-filtered reconstructed sample value. A correction may be scaled with scaling parameter(s). Scaling parameters may be associated with a class index. Scaling parameters may be determined based on a classification index described herein. Examples of scaling parameters may include "scale" and/or "off" as provided in equations (8) and (9) respectively. Additional and/or alternative examples of correction models may be included herein as provided in equations (10)-(12):

$$\text{corr'} = \underline{\text{scale}} \times \text{corr} \tag{8}$$

$$\text{corr'} = \text{corr} + \underline{\text{off}} \tag{9}$$

$$\text{corr'} = \underline{s_0} \times \text{corr} + \underline{s_1} \times \text{corr}^2 \tag{10}$$

$$\text{corr'} = \underline{s_0} \times \text{corr} + \underline{o_0} \tag{11}$$

$$\text{corr'} = \underline{s_0} \times \text{corr} + \underline{s_1} \times \text{corr}^2 + \underline{o_0} \tag{12}$$

Scaling parameters (e.g., one or more scaling parameters) may be indicated and/or transmitted in video data (e.g., a bitstream). Scaling parameters may be known implicitly at the decoder. In some examples, scaling parameters may not be transmitted (e.g., explicitly). An index (idxCorr) referring to a pre-determined table (e.g., a look-up-table (LUT)) of scaling parameter values may be indicated in video data. In an example, an index value (e.g., ex: idxCorr=0) may correspond to not modifying a correction. In examples, one or more pre-determined tables may be used. An index ( e.g., an "index of scaling table") may be signaled in video data (e.g., the bitstream) to indicate a (e.g., which) pre-determined table to use. An index may be inferred from other coded values (e.g., QP values, coding mode configurations such as random access, low-delay, and/or the like).

The number of transmitted scaling parameter indexes may be less than (e.g., inferior to) a number of classes. Classes (e.g., some classes) may be grouped together. A transmitted index (e.g., one single transmitted index) may be associated with several classes. A minimum and/or maximum value (e.g., min;max) may be derived from adaptive clipping information (e.g., coded in a bitstream). If a minimum and/or maximum value is derived from adaptive clipping information, and/or if a classifier is a band classifier, a scaling parameter (e.g., indexes) for classes corresponding to samples out of a clipping range may not be transmitted. In some examples, the scaling parameter (e.g., indexes) for classes corresponding to samples out of a clipping range may be inferred (e.g., correction not modified) and/or derived from (e.g., other) transmitted scaling parameter values.

Scaling parameters may be adapted to an associated classification. Scaling parameters may allow for modification of a post-filter correction. A classifier may re-use an existing classifier used by a post-filter and/or another classifier (e.g., specific classifier).

In examples, an adaptive classifier may be used to provide classification-based scaling correction. A post-filter correction may be derived at sub-pel precision. Scaling parameters, grouping classes, balanced groups, and/or the like may be indicated (e.g., signaled) in video data (e.g., bitstream). Scaling parameters may be indicated differently for one or more components.

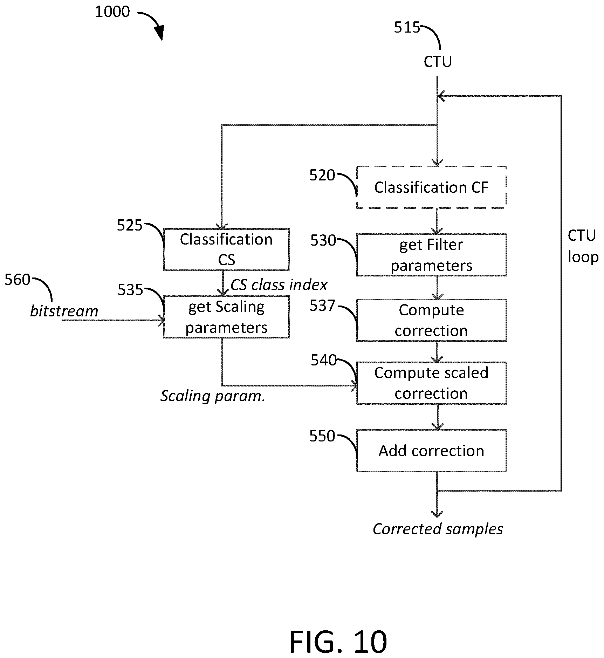

Classification-based scaling correction may be calculated as described herein. FIG. 10 shows an example process 1000 for classification-based scaling correction.

The scaling correction may be tailored to a (e.g., one) classification (CS(525)) (e.g., as illustrated in FIG. 8).

Derivation of a post-filter correction at sub-pel precision may be performed. A correction of a reconstructed sample may be computed, and the correction may be associated with a sub-pel correction precision. As shown in FIG. 10, post-filter correction may be derived at sub-pel precision (537). A correction may be calculated and stored at sub-pel precision. For example, as used herein, Fk() may indicate a post filter function associated with parameters Pk of the kth class. Filter coefficient precision shiftF may indicate the number of bits used to store values of filter tap coefficients ci. Sample x0 may indicate a current reconstructed sample. Sample xi where, $i\neq0$, may indicate the neighboring reconstructed samples.

Filter coefficient(s) for the reconstructed sample may be determined, and the filter coefficient(s) may be associated with a filter coefficient precision (e.g., shiftF). The correction of the reconstructed sample may be determined based on the filter coefficient and the filter coefficient precision.

For example, a full-pel post-filter correction may be computed at (537) as follows:

$$corr(x_0) = F_k(x_0) - x_0 = \left(\left(\left(\sum_{i=-n}^{n} c_i . x_i\right) + off\right) \gg shiftF\right) - x_0 \qquad (13)$$

for example, with off=1<<(shiftF-1).

A sub-pel correction $corr_P$ of the reconstructed sample may be determined based on the filter coefficient and the filter coefficient precision (shiftF bits precision) and the sub-pel correction precision (shiftP). For example, a sub-pel post-filter correction may be computed, with shiftP sub-pel bits precision at (537) as follows:

$$corr_P(x_0) = F_k(x_0) - x_0 = \left(\left(\left(\sum_{i=-n}^{n} c_i . x_i\right) + off\right) \gg (shiftF - shiftP)\right) - (x_0 \ll shiftP)$$

$$(14)$$

for example, with off=1<<(shiftF-shiftP-1).

A scaled correction may be computed on the correction, scaling parameter(s), the sub-pel correction precision, and the scaling parameter precision. The scaling parameter may be associated with a scaling parameter precision. The scaling parameter precision may be associated with or may include the number of bits of precision used to store a scaling parameter scale.

Once scaling parameters have been selected, for example, denote that shifts may include the number of bits of precision used to store (e.g., represent) a scaling parameter scale. In case of a simple scaling correction (e.g., see equation (1)), sub-pel bits precision of a re-scaled error (e.g., $corr'_P$ and/or the full pel precision corr' (15) of a re-scaled error) may be given by (540):

$$corr_P' = (\underline{scale} \times corr_P(x_0) + offS) \gg shiftS$$

$$shiftT = shiftS + shiftP$$

$$corr' = (\underline{scale} \times corr_P(x_0) + off) \gg shiftT \qquad (15)$$

for example, with offS=1<<(shiftS - 1 ) and off=1<<shiftT - 1).

The offset parameter may be determined based on the sub-pel correction precision (e.g., shiftP) and/or the scaling parameter precision (e.g., shifts). In examples, the offset parameter off may be determined based on the sub-pel correction precision (e.g., shiftP) and the scaling parameter precision (e.g., shifts). In examples, the offset parameter offS may be determined based on the scaling parameter precision (e.g., shifts).

The offset may be determined based on a sign of the correction. In examples, the value of the offset in equations (13), (14), and/or (15) may vary depending on the sign of a correction (e.g., such that the correction is rounded to the lowest absolute integer value (16) and/or to the nearest integer (17)). For example, in equation (15), an offset may be derived as follows:

$$off = \begin{cases} 1 \ll (shiftT - 2), & if\ corr(x_0) \geq 0 \\ 1 \ll (shiftT - 1), & else \end{cases} \qquad (16)$$

$$off = \begin{cases} 1 << (\text{ shiftT} - 1 ), & if\ corr(x_0) \geq 0 \\ 1 << (\text{ shiftT} - 2 ), & else \end{cases} \qquad (17)$$

Grouping classes and/or balanced groups may be provided herein.

In examples, scaling parameters may not be transmitted (e.g., explicitly). An index (idxCorr) referring to a predetermined table (LUT) of scaling parameter values may be transmitted and used. Some classes may be grouped together such that the number of transmitted scaling parameter indexes may be inferior to the number of CS classes (e.g., one single transmitted index may be associated to several classes). For example, a syntax element GS may be signaled. Syntax element GS may be used to derive (e.g., allow) the number of group (nbGroup). Syntax element SB may code nbGroup scaling parameter indexes (e.g., after signaling syntax element GS). For example, nbGroup = 1 << GS and/or nbGroup = GS.

The number of classes may be N (e.g., for example N=25, and/or N=24). For example, denote (e.g., kMin,kMax) the minimum and/or maximum class index values, one may group classes such that the groups include a similar number of class values. For example, the gth group may include class index values between a range [kMinG(g); kMaxG(g)]:

$$kMinG(g) = kMin + ((kMax - kMin + 1) * g \qquad >> GS)$$

$$kMaxG(g) = kMin + ((kMax - kMin + 1) * (g + 1) >> GS)$$

In examples, classes may be grouped such that the groups include the same and/or a similar number (e.g., exactly the same number) of class values, except a group (e.g., except the last group, g == nbGroup - 1). For example, the gth group may include class index values between the range [kMinG(g); kMaxG(g)]:

$$kMinG(g) = kMin + g * groupSize$$

$$kMaxG(g) = (g == nbGroup - 1) ? (kMax + 1) : (kMin + (g + 1) * groupSize)$$

For example, where: groupSize = (kMax - kMin + 1) >> GS.

Classification-based post-filter re-scaling may be applied for one or more components (e.g., both luma and chroma components, only a luma component, and/or only a chroma component).

In examples, chroma re-scaling may be applied for a (e.g., one) component but not classification-based re-scaling. In some examples, the samples may belong to the same and/or to a similar (e.g., single) class, and syntax related to a class may be removed for a component (e.g., GS not coded and/or inferred to 0). Classification-based post-filter re-scaling may be used for one or more (e.g., one or several) components, while classification based post-filter re-scaling may not be used for other component(s). In examples, a residual correction of a (e.g., one) component may not be re-scaled.

Example syntax for coding scaling parameters in a bitstream may be depicted in Table 2. Coding scaling parameters may be coded in the high level syntax of a picture and/or slice (e.g., a picture header and/or a slice header), and/or in a video coding layer (VCL). Coding scaling parameters may use whatever entropy coders (e.g., Cabac, variable length coding, and/or the like).

An example of syntax is depicted in Table 2. In Table 2, syntax elements (e.g., some syntax elements) may not be present, inferred to a pre-defined value, and/or inferred from other parameters (e.g., a slice type, an intra period, and/or the like).

As depicted in Table 2, classification-based post-filter re-scaling parameters may be coded for a luma component (e.g., see codeScaleCorrLuma()) and non-classification-based post-filter re-scaling parameters may be coded for a chroma component (see codeScaleCorrChroma()).

Table 2: Example syntax for configuring scaling parameter indexes

| codeScaleCorr( ) { | Descriptor |
|---|---|
| codeScaleCorrLuma() | |
| codeScaleCorrChroma() | |
| } | |
| | |

(continued)

| codeScaleCorrLuma ( ) { | Descriptor |
|---|---|
| **use_alf_scale_flag** | u(1) |
| if ( use_alf_scale_flag ) { | |
| for (int i = 0; i < getNumAps(); i++) { | |
| for (int j = 0; j < numAlts[i] ; j++) { | |
| **alC scale_group - shift[i] U]** | ue(v) |
| nbGroup = 1<< alf_scale_group_shift[i][j] | |
| for (int g = 0; g < nbGroup; g++) { | |
| **alf_scale_group_idx_corr[i][j][g]** | u(1) |
| if ( alf_scale_group_idx_corr[i][j][g] && nbCorr > 2 ) { | |
| uiCode | u (nbCorr) |
| **alf_scale_group_idx_corr[i][j][g]** += uiCode | |
| } | |
| } | |
| } | |
| } | |
| } | |
| } | |
| | |
| codeScaleCorrChroma () { | Descriptor |
| for (int comp = 1; comp <= 2; comp++) { | |
| if (alfCompEnable(comp) ) { | |
| | |
| nbCorr = getNbCorr[comp] | |
| **alf_scale_corr**[comp] | u(1) |
| if (alf_scale_comp[comp] && nbCorr > 2 ) { | |
| uiCode | u(nbCorr) |
| **alf_scale_corr**[comp] += uiCode | |
| } | |
| | |
| } | |
| } | |
| } | |

In examples, a parameter (e.g., for ALF scale indication), use_alf_scale_flag equal to 0 may indicate that no scaling parameters are coded and/or that the scaling parameter indexes are inferred to be 0 (e.g., correction not modified). In examples, a parameter (e.g., an ALF scale indication), use_alf_scale_flag equal to 1 may indicate that scaling parameters (e.g., some scaling parameters) are coded. In examples, a value (e.g., of an ALF scale indication,) use_alf_scale_flag, may be inferred for a (e.g., one or more) component. In examples, a parameter (e.g., for ALF scale indication), use_alf_scale_flag, may be shared for several components.

In examples, a parameter (e.g., an ALF scale parameter index indication), alf_scale_group_shift[i][j], may allow deriving a number of coded scaling parameter indexes for an jth alternative filter for the ith APS referenced in the current slice equal to (1 << alf_scale_group_shift[i][j]).

In examples, a parameter (e.g., an ALF scale parameter index value), alf scale_group idx corr[i][j][g] may be the scaling parameter index associated with a gth group of classes.

In examples, nbCorr may be a value. In examples, nbCorr may be the number of possible scaling values. A value of nbCorr may be different for each component. In examples, a value of nbCorr may be coded in the bitstream and/or inferred (e.g., from coding parameters).

In examples, a chroma scaling parameter index, alf_scale_corr[comp] may be the scaling parameter index associated with a chroma component "comp".

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A device for video decoding comprising:
   a processor configured to:

   determine a correction of a reconstructed sample, wherein the correction is associated with a sub-pel correction precision;
   determine a scaling parameter associated with the reconstructed sample, wherein the scaling parameter is associated with a scaling parameter precision;
   determine a scaled correction based on the correction, the scaling parameter, and the scaling parameter precision; and
   apply the scaled correction to the reconstructed sample.

2. A device for video encoding comprising:
   a processor configured to:

   determine a correction of a reconstructed sample, wherein the correction is associated with a sub-pel correction precision;
   determine a scaling parameter associated with the reconstructed sample, wherein the scaling parameter is associated with a scaling parameter precision;
   determine a scaled correction based on the correction, the scaling parameter, and the scaling parameter precision; and
   apply the scaled correction to the reconstructed sample.

3. The device of any one of claims 1 or 2, wherein the processor if further configured to:
   determine an offset based on the sub-pel correction precision and the scaling parameter precision, wherein the scaled correction is determined further based on the offset.

4. The device of claim 3, wherein the offset is further determined based on a sign of the correction.

5. The device of any one of claims 1-4, wherein the processor is further configured to determine the scaling parameter based on a classification, wherein the classification is associated with at least a reconstructed luma sample.

6. The device of any one of claims 1-5, wherein the scaled correction is associated with a full-pel correction precision, and the processor is further configured to:
   determine the scaled correction further based on the sub-pel correction precision.

7. The device of any one of claims 1-6, wherein the reconstructed sample comprises at least one of a reconstructed luma sample or a reconstructed chroma sample.

8. A method for video decoding comprising:

   determining a correction of a reconstructed sample, wherein the correction is associated with a sub-pel correction precision;

   determining a scaling parameter associated with the reconstructed sample, wherein the scaling parameter is associated with a scaling parameter precision;

   determining a scaled correction based on the correction, the scaling parameter, and the scaling parameter precision; and

   applying the scaled correction to the reconstructed sample.

9. A method for video encoding comprising:

   determining a correction of a reconstructed sample, wherein the correction is associated with a sub-pel correction precision;

   determining a scaling parameter associated with the reconstructed sample, wherein the scaling parameter is associated with a scaling parameter precision;

   determining a scaled correction based on the correction, the scaling parameter, and the scaling parameter precision; and

   applying the scaled correction to the reconstructed sample.

10. The method of any one of claims 8 or 9, wherein the method further comprises:
determining an offset based on the sub-pel correction precision and the scaling parameter precision, wherein the scaled correction is determined further based on the offset.

11. The method of claim 10, wherein the offset is further determined based on a sign of the correction.

12. The method of any one of claims 8-11, wherein the method further comprises determining the scaling parameter based on a classification, wherein the classification is associated with at least a reconstructed luma sample.

13. The method of any one of claims 8-12, wherein the scaled correction is associated with a full-pel correction precision, and the scaled correction is determined further based on the sub-pel correction precision.

14. A computer program product which is stored on a non-transitory computer readable medium and comprises program code instructions for implementing the steps according to at least one of claims 8-13 when executed by a processor.

15. Video data comprising information representative of a current video block encoded in accordance with any one of claims 9-13.

FIG. 1A

EP 4 661 393 A1

116

122

102

| 124 Speaker/ Microphone | 120 Transceiver | 134 Power Source |
|---|---|---|
| 126 Keypad | 118 Processor | 136 GPS Chipset |
| 128 Display/ Touchpad | | 138 Peripherals |

| 130 Non-Removable Memory | 132 Removable Memory |
|---|---|

FIG. 1B

FIG. 1C

EP 4 661 393 A1

FIG. 1D

EP 4 661 393 A1

FIG. 2

EP 4 661 393 A1

FIG. 3

FIG. 4

**FIG. 6**

600

515 — CTU

CTU loop

530 — get Filter parameters
540 — Compute correction
550 — Add correction
Corrected samples

545 — Get Scaling parameters

**FIG. 5**

500

515 — CTU

CTU loop

520 — Classification
530 — get Filter parameters
540 — Compute correction
550 — Add correction
Corrected samples

FIG. 7

EP 4 661 393 A1

FIG. 8

800

515 CTU

CTU loop

520 Classification CF

530 get Filter parameters

540 Compute scaled correction

550 Add correction

Corrected samples

525 Classification CS

CS class index

535 get Scaling parameters

Scaling param.

560 bitstream

900

660

*bitstream*

670

Reconstructed
samples

residuals

| Classification CS (e.g. NN-based) | → | get Scaling parameters |

*Scaling param.*

640

650

| NN-based post-filter | → | Compute scaled correction | → | Add correction | → Corrected samples |

675

FIG. 9

FIG. 10

Europäisches
Patentamt

European
Patent Office

Office européen
des brevets

# EUROPEAN SEARCH REPORT

**Application Number**

EP 24 30 5885

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/103816 A1 (KARCZEWICZ MARTA [US] ET AL) 31 March 2022 (2022-03-31) * abstract * * paragraphs [0085], [0092] - [0104], [0190] * | 1-15 | INV. H04N19/117 H04N19/136 H04N19/176 H04N19/182 H04N19/186 H04N19/70 |
| A | KEMAL UGUR ET AL: "Motion Compensated Prediction and Interpolation Filter Design in H.265/HEVC", IEEE JOURNAL OF SELECTED TOPICS IN SIGNAL PROCESSING, vol. 7, no. 6, 1 December 2013 (2013-12-01), pages 946-956, XP055161916, ISSN: 1932-4553, DOI: 10.1109/JSTSP.2013.2272771 * abstract * * section "B. High Precision Filtering Operations" * | 1-15 | |
| A | US 2023/336772 A1 (LI GUICHUN [US] ET AL) 19 October 2023 (2023-10-19) * abstract * * paragraphs [0152], [0238] * | 1-15 | TECHNICAL FIELDS SEARCHED (IPC) H04N |
| A | KR 2022 0081999 A (VID SCALE INC [US]) 16 June 2022 (2022-06-16) * abstract * * paragraphs [0232] - [0235], [0249] - [0256] * | 1-15 | |

-/--

The present search report has been drawn up for all claims

| Place of search | Date of completion of the search | Examiner |
|---|---|---|
| Munich | 21 October 2024 | Fassnacht, Carola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

**EUROPEAN SEARCH REPORT**

Europäisches
Patentamt
European
Patent Office
Office européen
des brevets

Application Number

EP 24 30 5885

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YAMAZAKI T ET AL: "Improvement of Sample Adaptive Offset with modified bit accuracy and restricted offsets", 97. MPEG MEETING; 18-7-2011 - 22-7-2011; TORINO; (MOTION PICTURE EXPERT GROUP OR ISO/IEC JTC1/SC29/WG11),, no. m20822, 15 July 2011 (2011-07-15), XP030049385, * abstract * * sections 1, 2 * ----- | 1-15 | |
| A | EP 2 725 797 A1 (SHARP KK [JP]) 30 April 2014 (2014-04-30) * abstract * * paragraphs [0001], [0009], [0011], [0016] * ----- | 1-15 | |

TECHNICAL FIELDS
SEARCHED (IPC)

The present search report has been drawn up for all claims

| Place of search | Date of completion of the search | Examiner |
|---|---|---|
| Munich | 21 October 2024 | Fassnacht, Carola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 5885

21-10-2024

| Patent document cited in search report | Publication date | Patent family member(s) | Publication date |
|---|---|---|---|
| US 2022103816 A1 | 31-03-2022 | BR 112023004483 A2 | 04-04-2023 |
| | | CN 116235494 A | 06-06-2023 |
| | | EP 4222953 A1 | 09-08-2023 |
| | | JP 2023542840 A | 12-10-2023 |
| | | KR 20230078653 A | 02-06-2023 |
| | | TW 202213996 A | 01-04-2022 |
| | | US 2022103816 A1 | 31-03-2022 |
| | | US 2023283772 A1 | 07-09-2023 |
| | | WO 2022072239 A1 | 07-04-2022 |
| US 2023336772 A1 | 19-10-2023 | CN 117256148 A | 19-12-2023 |
| | | KR 20240090508 A | 21-06-2024 |
| | | US 2023336772 A1 | 19-10-2023 |
| | | WO 2023204848 A1 | 26-10-2023 |
| KR 20220081999 A | 16-06-2022 | BR 112022005487 A2 | 14-06-2022 |
| | | CN 114586352 A | 03-06-2022 |
| | | EP 4035362 A1 | 03-08-2022 |
| | | KR 20220081999 A | 16-06-2022 |
| | | US 2022377324 A1 | 24-11-2022 |
| | | WO 2021061814 A1 | 01-04-2021 |
| EP 2725797 A1 | 30-04-2014 | AU 2012274326 A1 | 06-02-2014 |
| | | AU 2017204165 A1 | 13-07-2017 |
| | | AU 2018202384 A1 | 26-04-2018 |
| | | AU 2019200704 A1 | 21-02-2019 |
| | | CA 2840045 A1 | 27-12-2012 |
| | | CN 103636210 A | 12-03-2014 |
| | | CN 106604038 A | 26-04-2017 |
| | | CN 106851318 A | 13-06-2017 |
| | | CY 1123096 T1 | 31-12-2021 |
| | | DK 2725797 T3 | 02-01-2019 |
| | | DK 3361725 T3 | 27-04-2020 |
| | | DK 3720127 T3 | 14-10-2024 |
| | | EP 2725797 A1 | 30-04-2014 |
| | | EP 3361725 A1 | 15-08-2018 |
| | | EP 3720127 A1 | 07-10-2020 |
| | | EP 4135322 A1 | 15-02-2023 |
| | | EP 4135323 A1 | 15-02-2023 |
| | | EP 4199513 A1 | 21-06-2023 |
| | | ES 2699974 T3 | 13-02-2019 |
| | | ES 2788690 T3 | 22-10-2020 |
| | | HR P20181975 T1 | 25-01-2019 |
| | | HR P20200675 T1 | 24-07-2020 |
| | | HU E041898 T2 | 28-06-2019 |
| | | HU E049411 T2 | 28-10-2020 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 24 30 5885

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2024

| Patent document cited in search report | Publication date | Patent family member(s) | Publication date |
|---|---|---|---|
| | | JP 5973434 B2 | 23-08-2016 |
| | | JP 6272402 B2 | 31-01-2018 |
| | | JP 6496802 B2 | 10-04-2019 |
| | | JP 6780046 B2 | 04-11-2020 |
| | | JP 6957715 B2 | 02-11-2021 |
| | | JP 7200320 B2 | 06-01-2023 |
| | | JP 2016201824 A | 01-12-2016 |
| | | JP 2018082463 A | 24-05-2018 |
| | | JP 2019126077 A | 25-07-2019 |
| | | JP 2021005904 A | 14-01-2021 |
| | | JP 2022017267 A | 25-01-2022 |
| | | JP 2023024631 A | 16-02-2023 |
| | | JP WO2012176910 A1 | 23-02-2015 |
| | | KR 20140045978 A | 17-04-2014 |
| | | KR 20170116229 A | 18-10-2017 |
| | | KR 20180015280 A | 12-02-2018 |
| | | KR 20180085827 A | 27-07-2018 |
| | | KR 20180136585 A | 24-12-2018 |
| | | LT 3361725 T | 10-07-2020 |
| | | PL 2725797 T3 | 31-01-2019 |
| | | PL 3361725 T3 | 13-07-2020 |
| | | PT 2725797 T | 05-12-2018 |
| | | PT 3361725 T | 06-05-2020 |
| | | PT 3720127 T | 23-09-2024 |
| | | PT 4135322 T | 17-09-2024 |
| | | PT 4199513 T | 05-09-2024 |
| | | SI 2725797 T1 | 31-12-2018 |
| | | SI 3361725 T1 | 31-07-2020 |
| | | US 2014140416 A1 | 22-05-2014 |
| | | US 2017034511 A1 | 02-02-2017 |
| | | US 2018098067 A1 | 05-04-2018 |
| | | US 2018288414 A1 | 04-10-2018 |
| | | US 2019045187 A1 | 07-02-2019 |
| | | US 2019349583 A1 | 14-11-2019 |
| | | US 2020404265 A1 | 24-12-2020 |
| | | US 2021352283 A1 | 11-11-2021 |
| | | US 2023370593 A1 | 16-11-2023 |
| | | WO 2012176910 A1 | 27-12-2012 |

EPO FORM P0459

For more details about this annex : see Official Journal of the European Patent Office, No. 12/82

page 2 of 2